# EUROPEAN PATENT SPECIFICATION

(11) **EP 4 188 812 B1**
(45) Date of publication and mention of the grant of the patent: **07.05.2025**
(21) Application number: 21755321.3
(22) Date of filing: 28.07.2021
(51) Int. Cl.: B65B 69/00, A61M 1/00

(54) **ROLLING APPARATUS FOR ADVANCING LIQUID THROUGH TUBING**
ROLLVORRICHTUNG ZUM VORSCHIEBEN VON FLÜSSIGKEIT DURCH EIN ROHR
APPAREIL DE LAMINAGE POUR FAIRE AVANCER UN LIQUIDE À TRAVERS UN TUBE

(30) Priority: 30.07.2020 US 202063059125 P
(43) Date of publication of application: 07.06.2023
(73) Proprietor: GENENTECH, INC., South San Francisco, CA 94080 (US); F. Hoffmann-La Roche AG, 4070 Basel (CH)
(72) Inventor: EISELE, Thomas, 68305 Mannheim (DE); CATALDO, Pasquale, 68305 Mannheim (DE); WIESER, Scott, San Francisco, CA 94080-4990 (US); AWEAU, Warren Dana, San Francisco, CA 94080-4990 (US); GATDULA, Ruel G., San Francisco, CA 94080-4990 (US); RUMMEL, Nicholas, San Francisco, CA 94080-4990 (US); NARAYANAN, Arthi, San Francisco, CA 94080-4990 (US); FRANKMANN, Dennis, 68305 Mannheim (DE); CELIK, Orhan, 68305 Mannheim (DE); MARINGER, Mirko, 68305 Mannheim (DE); COSKUN, Murat, 68305 Mannheim (DE); DALMACIO, Henzel, San Francisco, CA 94080-4990 (US); MARKS, Dominik, 82377 Penzberg (DE); CHAN, Edward, San Francisco, CA 94080-4990 (US); SCOTT, Dustin Daniel, San Francisco, CA 94080-4990 (US); ASAL, Michael, 68305 Mannheim (DE)
(74) Representative: Meissner Bolte Partnerschaft mbB
(86) International application number: PCT/US2021/043556
(87) International publication number: WO 2022/026611

(56) References cited:
- US-A- 1 699 993
- US-A- 2 197 310
- US-A- 4 266 751
- US-A1- 2006 081 647
- US-A1- 2009 320 879

## Description

### BACKGROUND

Pharmaceutical manufacturing relies on efficient and effective transfer of liquids, *e.g.*, drug materials, from one receptacle to another during various phases of production or synthesis. Additionally, the liquid materials being manufactured and/or transferred can be extremely valuable. Therefore, any liquid, *e.g.* drug material, that remains caught in a component of the manufacturing equipment, such as piping or tubing commonly used between receptacles, can cause decreased reaction efficiency and/or yield. The loss of reaction efficiency, or of final drug product, can have negative financial impacts as well.

US 2009/320879 A1 discloses an apparatus for clearing tubing including a gripp assembly connected to a pair of rollers.

US 1 699 993 A1 relates to improvements in tube cleaners and more particularly to a device for use by undertakers and surgeons.

US 2006/081647 A1 describes a device for stripping fluid from a tube.

### SUMMARY

The object is solved by an apparatus according to claim 1. Preferred embodiments are subject matter of the dependent claims. The apparatus includes a first arm, including a first longitudinal member extending between a first hinged end and a first movable end. A first opening is defined by interior sidewalls of the first longitudinal member, the first hinged end, and the first movable end. The apparatus further includes a first roller disposed within the first opening, the first roller rotatable around a first axis extending longitudinally between the interior sidewall of the first hinged end and the interior sidewall of the first movable end. The apparatus further includes a second arm including a second longitudinal member extending between a second hinged end and a second movable end. A second opening is defined by interior sidewalls of the second longitudinal member, the second hinged end, and the second movable end. The apparatus further includes a second roller disposed within the second opening, the second roller rotatable around a second axis extending longitudinally between the interior sidewall of the second hinged end and the interior sidewall of the second movable end. The apparatus optionally includes an advancing unit coupled to the first roller and configured to rotate the first roller around the first axis. The first arm may be coupled to the second arm via a hinged coupling between the first hinged end and the second hinged end. The hinged coupling provides for the first movable end and the second movable end to move in relation to one another. A space is defined between the first roller and the second roller.

In another, interrelated aspect, a system is provided. The system includes a flexible tubing and a rolling apparatus coupled to the tubing. The rolling apparatus is the same as, or substantially similar to, the apparatus described above such that its features and functions will not be repeated here for the sake of brevity. The tubing is positioned in a space defined between the first roller and the second roller.

In another, interrelated aspect, another system is provided. The system includes a transfer unit. The system further includes a length of tubing having a first end and a second end, the first end coupled to the transfer unit such that a liquid (e.g., drug material) can move from the transfer unit into the length of tubing and can exit the tubing. The system further includes a liquid material removal apparatus releasably coupled to the length of tubing. The apparatus can compress the tubing sufficiently to seal the tubing, and the apparatus can be configured to move along the length of tubing in order to move the liquid material along the length of tubing.

Related methods are also described. In some variations, one or more of the following features may optionally be included in any feasible combination.

The first movable end and the second movable end can be movable relative to one another to form a closed position in which the first roller and the second roller are substantially parallel to one another. In the closed position, a first end region of the first movable end can abut a second end region of the second movable end. The space between the first roller and the second roller can accommodate a piece of tubing such that, when the apparatus is closed with a piece of tubing inserted between the first and second rollers, the piece of tubing can be compressed in the space between the first roller and the second roller.

The space between the first roller and the second roller can be such that when a tubing is compressed therebetween, the rollers can move relative to the piece of tubing. The movement can be provided by sliding the apparatus over the piece of tubing. The movement can be provided by manually sliding the apparatus over the piece of tubing. The movement can be provided by an advancing unit, and the advancing unit can be rotated to rotate the first roller. The advancing unit can include a crank. The apparatus includes a securing unit. The securing unit includes a first securing component coupled to the first movable end of the first arm and a second securing component coupled to the second movable end of the second arm, the first securing component and the second securing component configured to engage one another to secure together the first movable end and the second movable end. One or both of the first roller and the second roller can include one of a smooth outer surface, a textured outer surface, or a serrated outer surface.

The rolling apparatus can further include an advancing unit coupled to the first roller and configured to rotate the first roller around the first axis. The movement of the rollers relative to the tubing can advance liquid in the tubing along the tubing. The system can further include a receiving unit, such that the tubing can be coupled on the second end to the receiving unit, and the liquid material can move from the transfer unit to the receiving unit through the length of tubing. The rolling apparatus can further include an adjustment mechanism. The adjustment mechanism can be present on one or both of the first roller and/or the second roller. The adjustment mechanism can be configured to modulate the space between the first roller and the second roller such that sufficient pressure is provided to seal the piece of tubing therebetween. The adjustment mechanism can be a pressure regulating mechanism. The pressure regulating mechanism can be any one of a screw mechanism, a plurality of notches, and a spring mechanism.

The liquid or liquid material can include a drug material. The liquid or liquid material can include a cell culture medium, spent medium, cell culture supplement, cell culture additive, cell culture feed, a buffer, or water.

The drug material can include a pharmaceutical compound or a precursor to a pharmaceutical compound. The pharmaceutical compound can be a biologic. The biologic can be selected from a peptide, a protein, a vaccine, a nucleic acid, a virion, and a cell. The protein can be an antibody or fragment thereof, an antigen, a cytokine, an enzyme, a hormone, a recombinant protein, or a fusion protein.

### BRIEF DESCRIPTION OF THE DRAWINGS

FIG. 1A is a front plan view of a rolling apparatus consistent with implementations of the current subject matter.
FIG. 1B is a top plan view of the rolling apparatus of FIG. 1A.
FIG. 1C is a right side plan view of the rolling apparatus of FIG. 1A.
FIG. 1D is a front perspective view of the rolling apparatus of FIG. 1A.
FIG. 1E is a rear perspective view of the rolling apparatus of FIG. 1A.
FIG. 2A is a perspective view of a top arm of the rolling apparatus of FIG. 1A.
FIG. 2B is a perspective view of a bottom arm of the rolling apparatus of FIG. 1A.
FIG. 2C is a perspective view of a top roller of the rolling apparatus of FIG. 1A.
FIG. 2D is a perspective view of a bottom roller of the rolling apparatus of FIG. 1A.
FIG. 3A is a bottom perspective view of another embodiment of a rolling apparatus consistent with implementations of the current subject matter.
FIG. 3B is a front plan view of a rolling apparatus consistent with implementations of the current subject matter.
FIG. 3C is a top plan view of the rolling apparatus of FIG. 3B.
FIG. 3D is a right side plan view of the rolling apparatus of FIG. 3B.
FIG. 3E is a front perspective view of the rolling apparatus of FIG. 3B.
FIG. 4A is a bottom perspective view of another embodiment of a tube rolling system in an open configuration, consistent with implementations of the current subject matter.
FIG. 4B is a front perspective view of the tube rolling system of FIG. 4A in a closed position, consistent with implementations of the current subject matter.
FIG. 5A is a perspective view of an embodiment of a bottom roller component of a rolling apparatus, consistent with implementations of the current subject matter.
FIG. 5B is a perspective view of another embodiment of a bottom roller of a rolling apparatus, consistent with implementations of the current subject matter.
FIG. 5C is a perspective view of yet another embodiment of a bottom roller of a rolling apparatus, consistent with implementations of the current subject matter.
FIG. 6 is a schematic representation of a pharmaceutical manufacturing system, including a rolling apparatus consistent with implementations of the current subject matter.
FIG. 7A is a schematic representation of components of a rolling apparatus consistent with implementations of the current subject matter.
FIG. 7B is a schematic representation of another configuration of the rolling apparatus components of FIG. 7A.
FIG. 8A is a schematic representation of another embodiment of components of a rolling apparatus consistent with implementations of the current subject matter.
FIG. 8B is a schematic representation of another configuration of the rolling apparatus components of FIG. 8A.
FIG. 8C is a schematic representation of yet another configuration of the rolling apparatus components of FIG. 8A.
FIG. 9A is a schematic representation of yet another embodiment of components of a rolling apparatus consistent with implementations of the current subject matter.
FIG. 9B is a schematic representation of another configuration of the rolling apparatus components of FIG. 9A.

### DETAILED DESCRIPTION

The manufacturing of many therapeutic products is a difficult and expensive process. That is particularly true for a number of therapeutics manufactured using biotechnology. In some instances the failure to collect even small amounts of liquid material, such as manufactured biomaterial or drug products, a concentrated material, a medium or spent medium, or any liquid containing a valuable substance, can result in the loss of not only important drug supply, but in a major economic loss. In particular, some liquid manufacturing processes require the movement of liquid material through tubing, for example, in order to transfer liquid material from one receptacle to another location. It can be difficult to remove all such liquid material from such tubing. The instant technology relates generally to systems, devices, and methods for collecting liquid substance, in some cases very small quantities, that otherwise might go uncollected during the manufacturing process.

The present disclosure describes various embodiments of a rolling apparatus that can be used in pharmaceutical manufacturing or other applications requiring the elimination of a liquid material from a flexible tube. The rolling apparatus is configured to advance a liquid through flexible tubing by compressing the tubing as the rolling apparatus moves along the tubing from a first end toward a second end. For example, a manufacturing or synthesis system can include a first receptacle and a second receptacle, and a length of tubing connecting the first receptacle to the second receptacle. The rolling apparatus can be secured around the tubing at (near) the first receptacle, and advanced along the length of the tubing, compressing the tubing as it moves along the length of the tubing and forcing liquid material along the length of the tubing from the first receptacle into the second receptacle, thereby eliminating any residual liquid material in the tubing. Various embodiments of the rolling apparatus, and related systems and methods, are described in detail below.

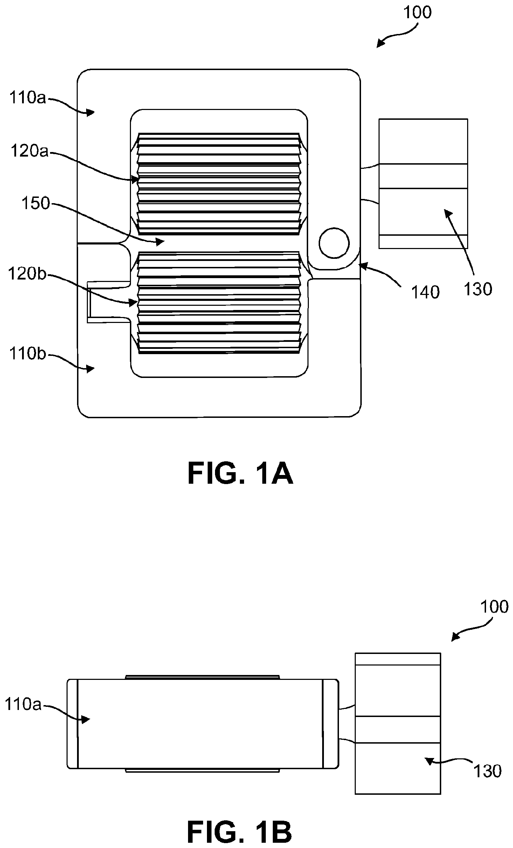

FIGS. 1A-1E illustrate a first embodiment of a rolling apparatus 100. The rolling apparatus 100 includes a top arm 110a and a bottom arm 110b, connected at a hinge 140. The top arm 110a includes a longitudinal member extending between a first end connected to the hinge 140 and a second, moveable end. The top arm 110a also includes a top roller 120a disposed within an opening defined by the interior sidewalls of the top arm 110a. The top roller 120a is configured to rotate around a first axis that extends longitudinally from the end of the top arm 110a connected to the hinge 140 to the moveable end of the top arm 110a. One or both of the top roller 120a and the bottom roller 120b can be configured as a single solid piece of material or a piece of material having a hollow bore or lumen extending along its length. The material can be solid or can have some degree of porosity. For example, one or both of the top roller 120a and the bottom roller 120b can be made of a plastic, a polymer, a metal, an alloy, a sponge-like material, an elastomeric material, a combination thereof, or any other material suitable to be formed into a solid or hollow roller component.

The top roller 120a can also include an advancing unit 130. For example, the advancing unit 130 can be coupled to the top roller 120a and can rotate the top roller 120a around the first axis. The advancing unit 130 can be, for example, a finger crank, a knob, a switch, a ratchet, a sliding mechanism, a drill connection, or the like.

The bottom arm 110b comprises a second longitudinal member extending between a first end connected to the hinge 140 and a second, moveable end. The hinge 140 can be configured to provide a coupling between the top arm 110a and the bottom arm 110b such that the moveable ends of the top arm 110a and the bottom arm 110b can move in relation to one another, for example swinging between a closed position and an open position. When in a closed position, the top arm 110a can abut the bottom arm 120b. The bottom arm 110b includes a bottom roller 120b disposed within an opening defined by the interior sidewalls of the bottom arm 110b. The bottom roller 120b is configured to rotate around a second axis, extending longitudinally from the end of the bottom arm 110b attached to the hinge 140 to the moveable end of the bottom arm 110b. When the rolling apparatus 100 is in a closed position, as shown in FIG. 1A, the top roller 120a can be substantially parallel to the bottom roller 120b, and a space 150 can be formed between the top roller 120a and the bottom roller 120b. The size of the space 150, for example the distance between the top roller 120a and the bottom roller 120b, is correlated to the size and thickness of the tubing that will be used with the rolling apparatus 100. The space 150 can be configured to accommodate a piece of tube or tubing. The dimensions of the space 150 can be modified by either shifting the first axis and/or the second axis up or down, or by increasing or decreasing the diameter of the top roller 120a and/or the bottom roller 120b. Additionally and/or alternatively, the dimensions of the space 150 can be modified by increasing or decreasing the length and/or height of the top arm 110a and the bottom arm 110b. The tube or tubing can have an inner diameter and an outer diameter, the inner diameter defining an inner lumen. In some embodiments, the tubing can have an inner diameter of approximately 0.5 inches, and an outer diameter of approximately 0.75 inches. It should be appreciated that the size of the tubing may vary without departing from the scope of this disclosure.

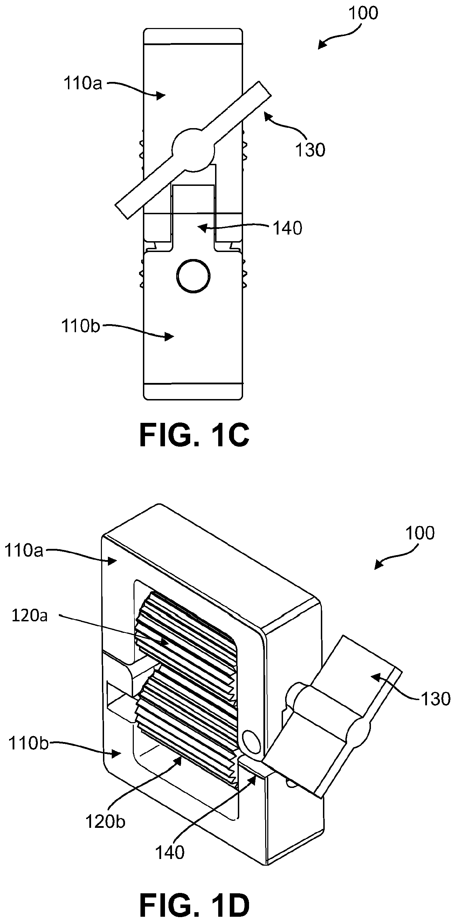

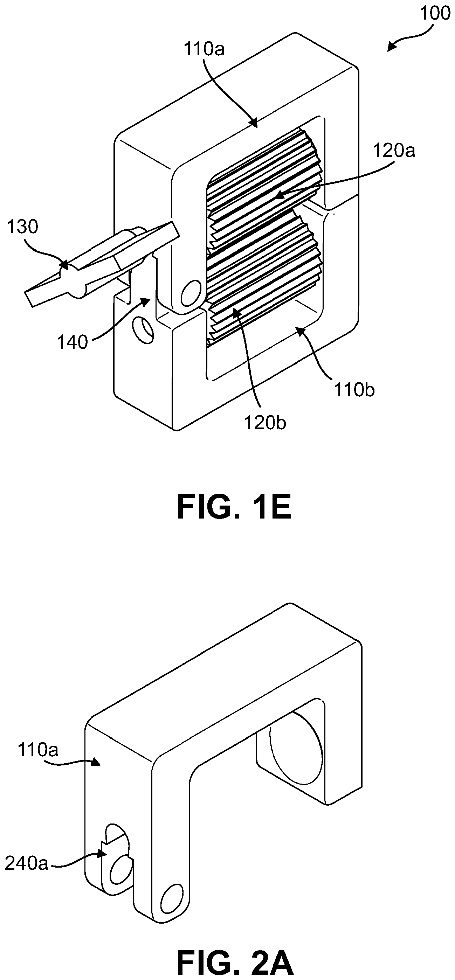

FIG. 1B illustrates a top view of the rolling apparatus 100. The top arm 110a and the advancing unit 130 are shown. FIG. 1C illustrates a side view of the rolling apparatus 100. As can be seen in FIG. 1C, the advancing unit 130 can be located on the same side of the rolling apparatus 100 as the hinge 140. FIG. 1D illustrates a front perspective view of the rolling apparatus 100, while FIG. 1E illustrates a rear perspective view. The top arm 110a with top roller 120a, bottom arm 110b with bottom roller 120b, hinge 140, and advancing unit 130 are illustrated.

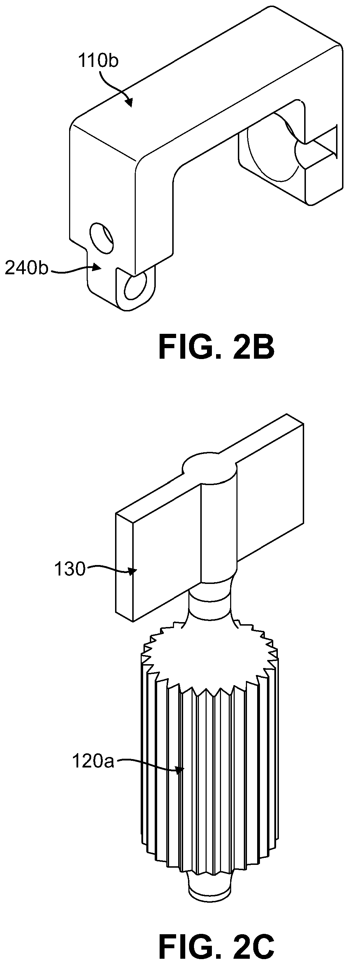

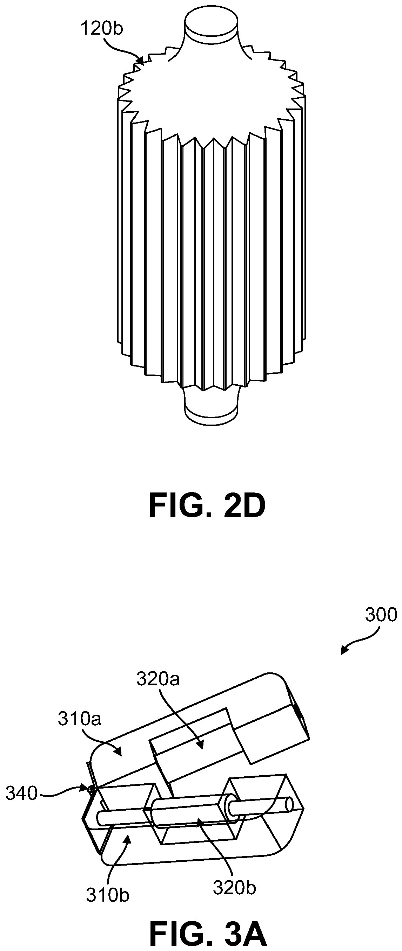

FIGS. 2A-2D illustrate various components of the rolling apparatus 100. FIG. 2A shows the top arm 110a. The top arm 110a can include a recess 240a. FIG. 2B shows the bottom arm 110b. which can include a protrusion 240b. The recess 240a shown in FIG. 2A can be configured to receive the protrusion 240b and thereby form the hinge 140. FIG. 2C shows the advancing unit 130 coupled to the top roller 120a. FIG. 2D illustrates, in a perspective view, the bottom roller 120b.

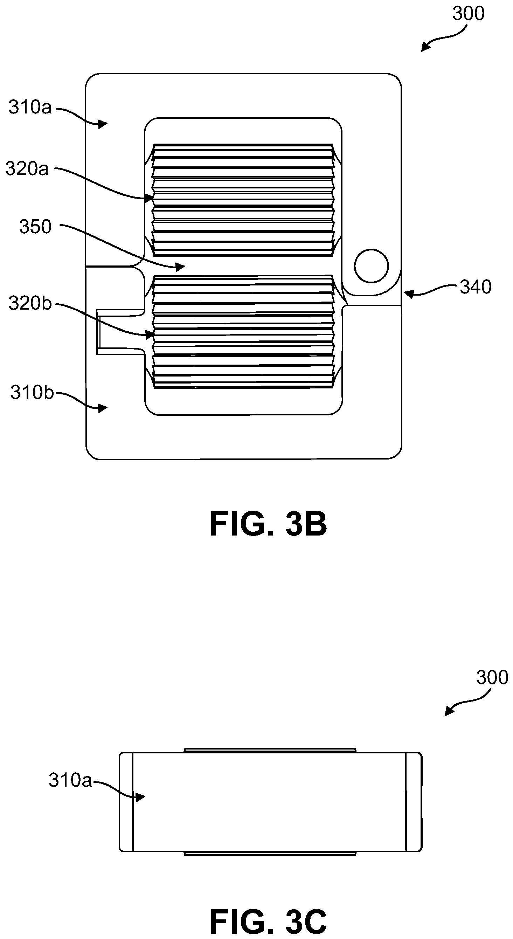

FIG. 3A illustrates another embodiment of a rolling apparatus 300. The rolling apparatus 300 includes a top arm 310a, a top roller 320a, a bottom arm 310b, a bottom roller 320b, and a hinge 340 which are the same as, or substantially similar to, those described above such that their features and functions will not be repeated here for the sake of brevity. The rolling apparatus 300 is shown in an open configuration. In some embodiments, the rolling apparatus 300 can be moved along a length of tubing, by sliding the rolling apparatus 300 over the piece of tube or tubing. FIG. 3B illustrates another embodiment of a rolling apparatus 300 similar to FIG. 3A. FIGs. 3C-3E provide different views of the rolling apparatus 300 of FIG. 3B.

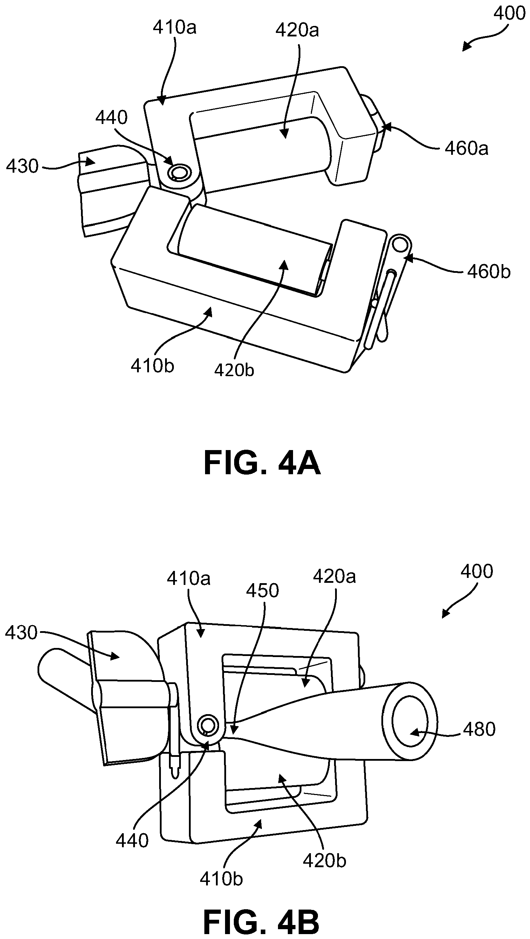

FIGS. 4A-4B illustrate an embodiment of a tube rolling system 400. The tube rolling system includes a top arm 410a, a bottom arm 410b, a bottom roller 420b, a hinge 440, and an advancing unit 430 which are the same as, or substantially similar to, those described above such that their features and functions will not be repeated here for the sake of brevity. FIG. 4A shows the tube rolling system 400 in an open position. The tube rolling system 400 can also include a securing unit having a first securing component 460a and a second securing component 460b. For example, the first securing component 460a can be coupled to the moveable end of the top arm 410a, and the second securing component 460b can be coupled to the moveable end of the bottom arm 410b, such that the first securing component 460a and the second securing component 460b engage one another to secure together the moveable ends of the top arm 410a and the bottom arm 410b. The securing unit can be any suitable fastener, such as a tie, a latch, a releasable adhesive, a snap, a button, or the like.

FIG. 4B shows the tube rolling system 400 in a closed position around a section of tubing 480. The tubing 480 can be positioned in a space 450 defined between the top roller 420a and the bottom roller 420b. The tubing 480 can be compressed within the space 450. The compression of the tubing 480 within the space 450 can allow movement of the top roller 420a and the bottom roller 420b, relative to the tubing 480. In some embodiments, the movement can be provided by the advancing unit 430. The top roller 420a and the bottom roller 420b can have surfaces configured to assist with gripping and compressing the tubing 480.

In embodiments of the tube rolling system 400, the top arm 410a and the bottom arm 410b may be connected at one or both ends by a fastening means other than a hinge 440. For example, the top arm 410a and the bottom arm 410b may be present as separate pieces. The separate pieces may be joined together at one or both ends after insertion of a tube or tubing 480 between the rollers of each arm, for example by a hinge 440 or a securing unit as described above, or by any other suitable fastening means such as a latch, a snap, a button, a hook and eye, a releasable adhesive, a magnetic connection, a friction fit, or the like.

In embodiments of the tube rolling system 400, the top arm 410a and the bottom arm 410b may be connected at both ends prior to insertion of a tube or tubing 480 between the top roller 420a and the bottom roller 420b. The top arm 410a and bottom arm 410b may be permanently connected at one or both ends (e.g., the top arm 410a and bottom arm 410b may be a single piece or joined by a fastening mechanism, glue, or the like) or may be releasably connected. For example, the top arm 410a and the bottom arm 410b may be a single piece, and the tube rolling system 400 may be configured such that a user inserts the tubing 480 into the space 450 between the top roller 420a and the bottom roller 420b, and pushes (e.g., manually pushes) the tubing 480 through the space 450.

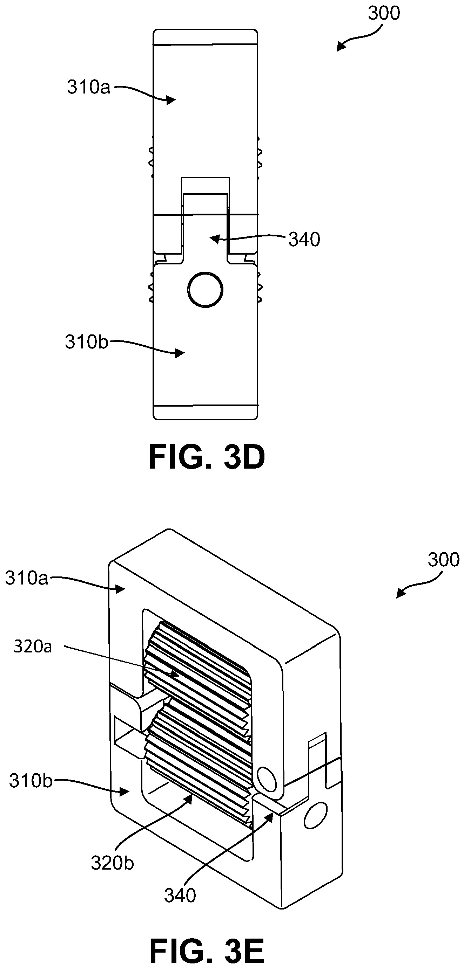

The rollers shown in FIGs. 1A-1E, 2C and 2D each have a serrated outer surface. In embodiments, rollers in any embodiments shown or described herein may have a smooth outer surface. Similarly, although the rollers shown in FIG. 3 have a smooth surface, rollers in any embodiments shown or described herein may have a serrated, textured, or grooved outer surface.

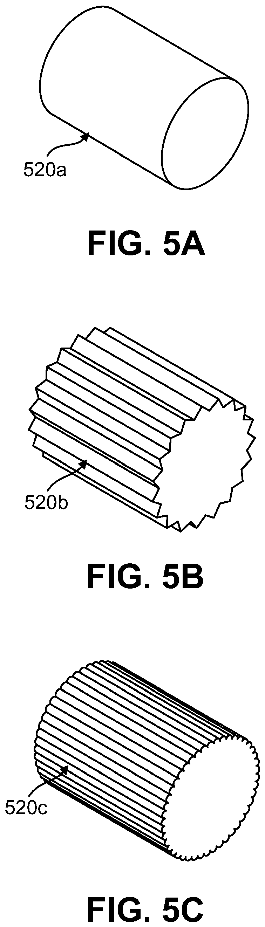

As shown in FIGS. 5A-5C, the surface texture of one or both of the roller components can be varied. FIG. 5A shows a roller 520a having a smooth surface texture. FIG. 5B shows a roller 520b having a serrated surface texture. FIG. 5C shows a roller 520c having a grooved surface texture. The serrations or grooves can assist with gripping of the tubing 480 as it is compressed within the space 450 of the tube rolling system 400.

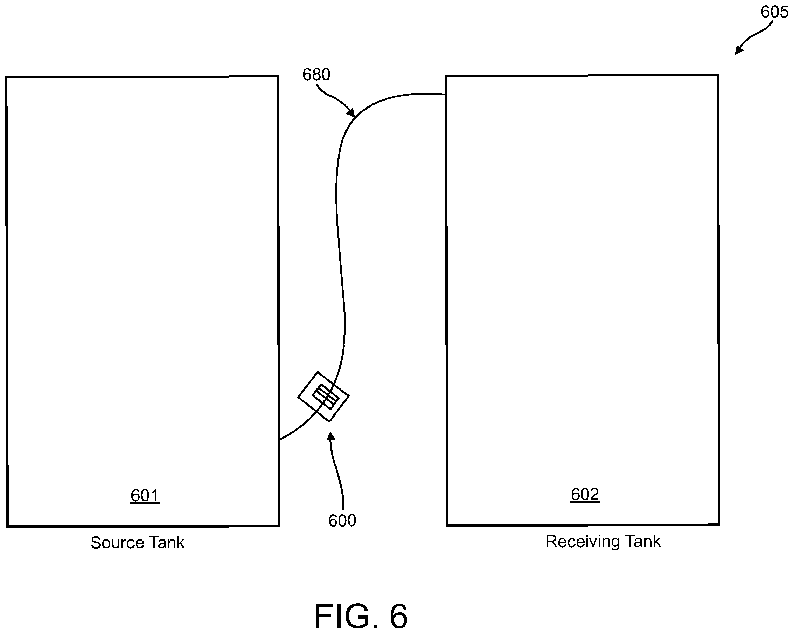

FIG. 6 is a schematic representation of a production system 605. The production system 605 can include a transfer unit, such as a source tank 601, and a receiving unit, such as a receiving tank 602. The production system 605 can further include a length of tube 680 coupled to the source tank 601 at a first end of the tube 680 and the receiving tank 602 at a second end of the tube 680. The production system 600 can also include a liquid material removal apparatus such as a rolling apparatus 600. The rolling apparatus 600 can be releasably coupled to the tube 680 at a point near the source tank 601. The rolling apparatus 600 can compress the tube 680, for example the rolling apparatus 600 can provide sufficient compression to seal the tube 680. Sealing, as used herein, refers to compressing the tube 680 such that an internal lumen of the tube 680 is collapsed or closed. For example, the tube 680 may be sealed by compressing the tube 680 such that two opposed, interior points on the internal lumen contact one another, thereby collapsing at least a portion of the internal lumen of the tube 680. The rolling apparatus 600 can be configured to move along a length of the tube 680, and thereby move the liquid material from the source tank 601 to the receiving tank 602.

In some embodiments, a single rolling apparatus can be used with a wide range of tubing having a variety of dimensions. To achieve this, the distance between the roller components of the single rolling apparatus can be adjustable. Described below are various embodiments of bottom roller components of a single rolling apparatus for use with varying tube sizes.

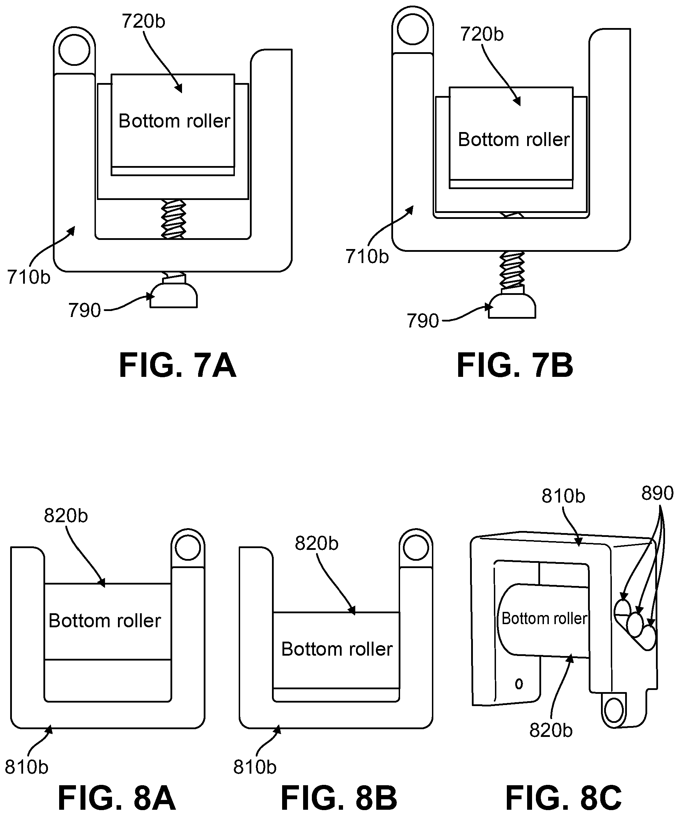

FIGS. 7A-7B illustrate an embodiment of a bottom arm 710b of a rolling apparatus. The rolling apparatus can include an adjustment mechanism, such as a screw mechanism 790. The adjustment mechanism can be any positioning or pressure regulating mechanism capable of adjusting the height of the bottom roller 720b within the bottom arm 710b of the rolling apparatus while still providing sufficient support to seal the tube. It should be appreciated that the adjustment mechanisms described herein can be present on one or both of the top arm (not shown) and the bottom arm 710b of a rolling apparatus as described herein including embodiments. For example, the screw mechanism 790 can be configured to raise and lower the bottom roller 720b within the bottom arm 710b. FIG. 7A shows the screw mechanism 790 having raised the bottom roller 720b. FIG. 7B shows the screw mechanism 790 having lowered the bottom roller 720b.

FIGS. 8A-8C illustrate another embodiment of a bottom arm 810b of a rolling apparatus including an adjustment mechanism to reposition the bottom roller 820b. The adjustment mechanism can be notches 890 configured to receive the ends of the bottom roller 820b. The bottom roller 820b can be positioned within one of the notches 890 to adjust the height of the bottom roller 820b within the bottom arm 810b. FIG. 8A shows the bottom roller 820b positioned within the highest of the notches 890. FIG. 8B shows the bottom roller 820b positioned within the lowest of the notches 890. FIG. 8C shows the bottom roller positioned within the middle notch of the notches 890.

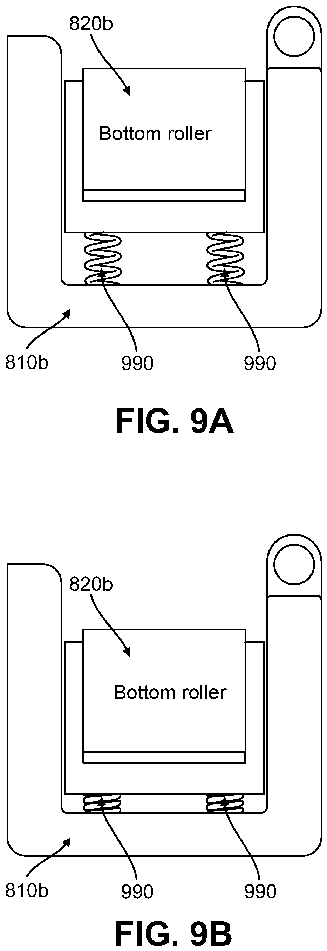

FIGS. 9A-9B illustrate another embodiment of a bottom arm 910b of a rolling apparatus including an adjustment mechanism. The adjustment mechanism can be a pressure regulation mechanism, such as a spring mechanism 990. For example, the spring mechanism 990 can be configured to raise or lower the bottom roller 820b while still providing sufficient support to seal the tubing. FIG. 9A shows the spring mechanism 990 having raised the bottom roller 820b. FIG. 9B shows the spring mechanism having lowered the bottom roller 820b.

In embodiments, the liquid or liquid material is a drug material, cell culture medium, spent medium, cell culture supplement, cell culture additive, cell culture feed, buffer, concentrated material, or any liquid containing a valuable substance. The liquid material can be a drug material. The drug material can include a pharmaceutical compound or a precursor to a pharmaceutical compound. For example, the pharmaceutical compound can be a biologic. The biologic can be one or more of a peptide, a protein, a vaccine, a nucleic acid, a virion, a cell, or a combination thereof. The peptide or protein can be an antibody or fragment thereof, an antigen, a cytokine, an enzyme, a hormone, a recombinant protein, or a fusion protein.

The transfer unit may be, for example, a bioreactor, a filtration unit, a centrifuge unit (e.g., a tube, vessel, basket, holder, cup holder, and the like), a vessel, or a tubing assembly. The receiving unit may be, for example, a bioreactor, a filtration unit, a centrifuge unit (e.g., a tube, vessel, basket, holder, cup holder, and the like), a vessel, or a tubing assembly.

The space between the first roller and the second roller can be any size that accepts a compressed piece of tubing. For example, the tubing may be any flexible tubing (e.g., plastic tubing, silicone tubing, latex tubing, etc.). The tubing may be of a standard thickness or diameter. The tubing may be reinforced or not reinforced. The space between the first roller and the second roller can be between about 0.5 millimeters (mm) and about 15 mm. The space between the first roller and the second roller can be between about 0.5 mm and about 10 mm. The space between the first roller and the second roller can be between about 0.5 mm and about 5 mm. The space between the first roller and the second roller can be between about 0.5 mm and about 4 mm. The space between the first roller and the second roller can be between about 0.5 mm and about 3 mm. The space between the first roller and the second roller can be between about 0.5 mm and about 2 mm. The space between the first roller and the second roller can be between about 0.5 mm and about 1 mm. The space between the first roller and the second roller can be between about 1 mm and about 15 mm. The space between the first roller and the second roller can be between about 2 mm and about 15 mm. The space between the first roller and the second roller can be between about 3 mm and about 15 mm. The space between the first roller and the second roller can be between about 4 mm and about 15 mm. The space between the first roller and the second roller can be between about 5 mm and about 15 mm. The space between the first roller and the second roller can be between about 6 mm and about 15 mm. The space between the first roller and the second roller can be between about 7 mm and about 15 mm. The space between the first roller and the second roller can be between about 8 mm and about 15 mm. The space between the first roller and the second roller can be between about 9 mm and about 15 mm. The space between the first roller and the second roller can be between about 10 mm and about 15 mm. The space between the first roller and the second roller can be between about 11 mm and about 15 mm. The space between the first roller and the second roller can be between about 12 mm and about 15 mm. The space between the first roller and the second roller can be between about 13 mm and about 15 mm. The space between the first roller and the second roller can be between about 14 mm and about 15 mm. The space between the first roller and the second roller can be between about 1 mm and about 10 mm. The space between the first roller and the second roller can be between about 1 mm and about 5 mm. The space between the first roller and the second roller can be between about 5 mm and about 15 mm. The space between the first roller and the second roller can be between about 5 mm and about 10 mm. The space can be any value or subrange within the recited ranges, including endpoints. For example, the space between the first roller and the second roller can be about 0.5 mm, about 1 mm, about 2 mm, about 3 mm, about 4 mm, about 5 mm, about 6 mm, about 7 mm, about 8 mm, about 9 mm, about 10 mm, about 11 mm, about 12 mm, about 13 mm, about 14 mm, about 15 mm.

In embodiments, the methods, systems and apparatus described herein are used during preparation, production, and/or manufacture of a pharmaceutical product or cell/culture solution, or during the culturing of a cell. In embodiments, the liquid or liquid material is an intermediate pharmaceutical product. For example, the liquid or liquid material may not include the final formulation of a drug, pharmaceutical product, over-the-counter product, and the like. In embodiments, the liquid or liquid material is not a cell culture medium. In embodiments, the liquid or liquid material is not a topical composition. In embodiments, the liquid or liquid material is not a cream or lotion. In embodiments, the liquid or liquid material is not a cream or lotion for topical use. In embodiments, the liquid or liquid material is not toothpaste. In embodiments, the tubing or length of tubing is reusable. In embodiments, the tubing or length of tubing returns to substantially its original shape after removal of compression by the apparatus.

In embodiments, the tubing or length of tubing is open at both ends. For example, the tubing can be open on both ends and have one or both ends attached to and/or in fluid contact with a receptacle or reservoir, such as a transfer unit as described herein. In embodiments, the tubing or length of tubing is not closed on one end. In embodiments, the tubing or length of tubing is not sealed on one end.

### I. Methods of use

In an aspect, a method is provided. The method includes coupling a rolling apparatus to tubing. In embodiments, the tubing can extend between a transfer unit and a receiving unit. For example, the tubing can connect to the interior of the transfer unit at a first end of the tubing, and to the interior of the receiving unit at a second end of the tubing opposite the first end, such that a fluid can move between the transfer unit and the receiving unit along a length of an interior lumen of the tubing. The rolling apparatus is the same as, or substantially similar to, the apparatus described above such that its features and functions will not be repeated here for the sake of brevity. The tubing is positioned in a space defined between the first roller and the second roller. The method further includes advancing the rolling apparatus from a first portion of the tubing to a second portion of the tubing such that liquid in the tubing is advanced from the first portion of the tubing to the second portion of the tubing.

In another, interrelated aspect, a method of removing liquid material (e.g., a drug material, a concentrated material, a medium or spent medium, a buffer, or any liquid containing a valuable substance) from a length of tubing when transferring the liquid material from a transfer unit to a receiving unit is provided. The method includes providing a transfer unit including a liquid material; providing a receiving unit into which the liquid material is to be transferred; and providing a length of tubing coupled on a first end to the transfer unit and on a second end to the receiving unit. The method further includes transferring the liquid material from the transfer unit to the receiving unit via the length of tubing. The method further includes releasably coupling a liquid material removal apparatus to the length of tubing at or near the first end, and compressing a subsection of the tubing with the liquid material movement apparatus, thereby sealing the subsection of tubing such that substantially no liquid material can pass through the sealed subsection. The method further includes moving the liquid material removal apparatus along the length of tubing toward the receiving unit such that a quantity of liquid material in the length of tubing is moved toward the second end of the length of tubing. The method further includes collecting the moved liquid material in the receiving unit.

The method can include advancing the rolling apparatus from the second portion of the tubing to an entry point of the receiving unit such that the liquid in the tubing can be advanced from the second portion of the tubing to the receiving unit. The tubing can be connected to a transfer unit and/or a receiving unit, wherein one or more of the transfer unit and the receiving unit include a bioreactor, a filtration unit, a centrifuge unit (e.g., a tube, vessel, basket, holder, cup holder, and the like), a vessel, or a tubing assembly. Coupling the rolling apparatus to the tubing can include positioning the tubing in the space between the first roller and the second roller and moving one or more of the first movable end and the second movable end to form a closed position in which the first roller and the second roller can be substantially parallel to one another.

In embodiments, all or substantially all of the liquid in the tubing is removed by advancing the rolling apparatus. "Substantially all" as used herein means that at least about 70%, about 75%, about 80%, about 85%, about 90%, about 95%, about 99%, or about 99.9% of the liquid that was in the tube prior to advancing the apparatus along the tube is removed from the tube. In embodiments, at least about 90% of the liquid that was in the tube prior to advancing the apparatus along the tube is removed from the tube. In embodiments, at least about 95% of the liquid that was in the tube prior to advancing the apparatus along the tube is removed from the tube. In embodiments, at least about 99% of the liquid that was in the tube prior to advancing the apparatus along the tube is removed from the tube. In embodiments, at least about 99.9% of the liquid that was in the tube prior to advancing the apparatus along the tube is removed from the tube. The value may be any value or subrange within the recited ranges, including endpoints.

In embodiments, the liquid or liquid material is a drug material, concentrated material, cell culture medium, spent medium, cell culture supplement, cell culture additive, cell culture feed, buffer, or water. In embodiments, the liquid or liquid material is a drug material. In embodiments, the liquid or liquid material is a concentrated material. In embodiments, the liquid or liquid material is a cell culture medium. In embodiments, the liquid or liquid material is a spent medium. In embodiments, the liquid or liquid material is a cell culture supplement. In embodiments, the liquid or liquid material is a cell culture additive. In embodiments, the liquid or liquid material is a cell culture feed. In embodiments, the liquid or liquid material is a buffer. In embodiments, the liquid or liquid material is water.

In some embodiments, the liquid material can be a drug material. The drug material can include a pharmaceutical compound or a precursor to a pharmaceutical compound. For example, the pharmaceutical compound can be a biologic. The biologic can be one or more of a peptide, a protein, a vaccine, a nucleic acid, a virion, a cell, or a combination thereof. The peptide or protein can be an antibody or fragment thereof, an antigen, a cytokine, an enzyme, a hormone, a recombinant protein, or a fusion protein. The precursor to a pharmaceutical compound may be any intermediate in the production of the pharmaceutical compound. For example the precursor may be an intermediate compound, a partially formed peptide, an unfolded/misfolded peptide, media or buffer containing the pharmaceutical compound (or precursor), cells containing the pharmaceutical compound (or precursor), etc.

### II. Definitions

As used herein, the terms "hinge," "hinged," and/or "hinged region" are used to refer to a moveable joint or mechanism that connects two objects and allows a limited range of motion. For example, a hinge can allow two objects, or two pieces of an object or system, to swing between an open and a closed position. The hinge or hinged region can include, without limitation, a latch, a hook and eye, a spring hinge, a barrel hinge, a continuous hinge, a friction hinge, a flush hinge, a double action hinge, a spring hinge, or the like.

As used herein, the term "serrated outer surface" is used to refer to any gripping surface, or surface capable of gripping another surface, having serration that aids in the gripping. The serration can include, without limitation, teeth, dots, ridges, bumps, detents, protrusions, a combination thereof, or any other suitable configuration capable of aiding in the gripping of another surface.

As used herein, the term "textured outer surface" is used to refer to any gripping surface, or surface capable of gripping another surface, having a texture that aids in the gripping. The texture can include, without limitation, hatching, scoring, etching, laser etching, engraving, a combination thereof, or any other suitable texture capable of aiding in the gripping of another surface.

As used herein, the term "smooth outer surface" is used to refer to any gripping surface, or surface capable of gripping another surface, having a surface that lacks any serration or texture to aid in the gripping.

As used herein, the term "advancing unit" is used to refer to any physical mechanism capable of being manipulated by a user to cause movement, such as rotation of a roller around an axis. The advancing unit can include, without limitation, a finger crank, a knob, a drill connection, a switch, a sliding mechanism, a ratcheting mechanism, or any other mechanism suitable for such manipulation by a user to cause rotation of a roller around an axis.

As used herein, the term "sliding" is used to refer to manual sliding, automated sliding, motorized sliding, remote-controlled sliding, actuated sliding, or any other means by which an object is moved or slid along a length of another object or a medium.

As used herein, the terms "tube" or "tubing" are used to refer to an elongate material having an outer diameter and an inner diameter, the inner diameter defining a lumen extending the length of the elongate material. The tube may comprise a flexible material, such as a polymer, a plastic, an alloy, a silicone material, or the like.

As used herein, the terms "liquid" or "liquid material" are used to refer to fluid substances exhibiting various viscosities, including inviscid fluids, or fluid substances that include some level of non-liquid material such as biomaterial. For example, liquid material may include fluids, fluid-like substances, mixtures of liquid and solid material exhibiting fluid characteristics, inviscid fluids, or the like.

The term "amino acid" refers to naturally occurring and synthetic amino acids, as well as amino acid analogs and amino acid mimetics that function in a manner similar to the naturally occurring amino acids. Naturally occurring amino acids are those encoded by the genetic code, as well as those amino acids that are later modified, *e.g*., hydroxyproline, γ-carboxyglutamate, and O-phosphoserine. Amino acid analogs refers to compounds that have the same basic chemical structure as a naturally occurring amino acid, *i.e.,* an α carbon that is bound to a hydrogen, a carboxyl group, an amino group, and an R group, *e.g*., homoserine, norleucine, methionine sulfoxide, methionine methyl sulfonium. Such analogs have modified R groups (*e.g*., norleucine) or modified peptide backbones, but retain the same basic chemical structure as a naturally occurring amino acid. Amino acid mimetics refers to chemical compounds that have a structure that is different from the general chemical structure of an amino acid, but that functions in a manner similar to a naturally occurring amino acid. The terms "non-naturally occurring amino acid" and "unnatural amino acid" refer to amino acid analogs, synthetic amino acids, and amino acid mimetics which are not found in nature.

Amino acids may be referred to herein by either their commonly known three letter symbols or by the one-letter symbols recommended by the IUPAC-IUB Biochemical Nomenclature Commission. Nucleotides, likewise, may be referred to by their commonly accepted single-letter codes.

The terms "polypeptide," "peptide" and "protein" are used interchangeably herein to refer to a polymer of amino acid residues, wherein the polymer may be conjugated to a moiety that does not consist of amino acids. The terms apply to amino acid polymers in which one or more amino acid residue is an artificial chemical mimetic of a corresponding naturally occurring amino acid, as well as to naturally occurring amino acid polymers and non-naturally occurring amino acid polymers. A "fusion protein" refers to a chimeric protein encoding two or more separate protein sequences that are recombinantly expressed as a single moiety.

The term "antibody" refers to a polypeptide encoded by an immunoglobulin gene or functional fragments thereof that specifically binds and recognizes an antigen. The recognized immunoglobulin genes include the kappa, lambda, alpha, gamma, delta, epsilon, and mu constant region genes, as well as the myriad immunoglobulin variable region genes. Light chains are classified as either kappa or lambda. Heavy chains are classified as gamma, mu, alpha, delta, or epsilon, which in turn define the immunoglobulin classes, IgG, IgM, IgA, IgD and IgE, respectively.

Examples of antibody functional fragments include, but are not limited to, complete antibody molecules, antibody fragments, such as Fv, single chain Fv (scFv), complementarity determining regions (CDRs), VL (light chain variable region), VH (heavy chain variable region), Fab, F(ab)2' and any combination of those or any other functional portion of an immunoglobulin peptide capable of binding to target antigen (*see, e.g.*, FUNDAMENTAL IMMUNOLOGY (Paul ed., 4th ed. 2001). As appreciated by one of skill in the art, various antibody fragments can be obtained by a variety of methods, for example, digestion of an intact antibody with an enzyme, such as pepsin; or de novo synthesis. Antibody fragments are often synthesized de novo either chemically or by using recombinant DNA methodology. Thus, the term antibody, as used herein, includes antibody fragments either produced by the modification of whole antibodies, or those synthesized de novo using recombinant DNA methodologies (*e.g*., single chain Fv) or those identified using phage display libraries (see, *e.g.*, McCafferty et al., (1990) Nature 348:552). The term "antibody" also includes bivalent or bispecific molecules, diabodies, triabodies, and tetrabodies. Bivalent and bispecific molecules are described in, *e.g.*, Kostelny et al. (1992) J. Immunol. 148:1547, Pack and Pluckthun (1992) Biochemistry 31:1579, Hollinger et al.( 1993), PNAS. USA 90:6444, Gruber et al. (1994) J Immunol. 152:5368, Zhu et al. (1997) Protein Sci. 6:781, Hu et al. (1996) Cancer Res. 56:3055, Adams et al. (1993) Cancer Res. 53:4026, and McCartney, et al. (1995) Protein Eng. 8:301.

As used herein, the term "about" means a range of values including the specified value, which a person of ordinary skill in the art would consider reasonably similar to the specified value. In embodiments, about means within a standard deviation using measurements generally acceptable in the art. In embodiments, about means a range extending to +/- 10% of the specified value. In embodiments, about includes the specified value.

In this disclosure, "comprises," "comprising," "containing" and "having" and the like can have the meaning ascribed to them in U.S. Patent law and can mean " includes," "including," and the like. "Consisting essentially of or "consists essentially" likewise has the meaning ascribed in U.S. Patent law and the term is open-ended, allowing for the presence of more than that which is recited so long as basic or novel characteristics of that which is recited is not changed by the presence of more than that which is recited, but excludes prior art embodiments.

The terminology used herein is for the purpose of describing particular embodiments only and is not intended to be limiting. As used herein, the singular forms "a", "an" and "the" are intended to include the plural forms as well, unless the context clearly indicates otherwise.

"Optional" or "optionally" means that the subsequently described event or circumstance can or cannot occur, and that the description includes instances where the event or circumstance occurs and instances where it does not.

It is understood that the examples and embodiments described herein are for illustrative purposes only and that various modifications or changes in light thereof will be suggested to persons skilled in the art.

## Claims

1. An apparatus (100), comprising:
a first arm (110a) comprising a first longitudinal member extending between a first hinged end (140) and a first movable end such that a first opening is defined by interior sidewalls of the first longitudinal member, the first hinged end, and the first movable end;
a first roller (120a) disposed within the first opening, the first roller (120a) rotatable around a first axis extending longitudinally between the interior sidewall of the first hinged end and the interior sidewall of the first movable end;
a second arm (110b) comprising a second longitudinal member extending between a second hinged end and a second movable end such that a second opening is defined by interior sidewalls of the second longitudinal member, the second hinged end, and the second movable end;
a second roller (120b) disposed within the second opening, the second roller rotatable around a second axis extending longitudinally between the interior sidewall of the second hinged end and the interior sidewall of the second movable end;
wherein the first arm (110a) is coupled to the second arm (110b) via a hinged coupling (140) between the first hinged end and the second hinged end, the hinged coupling providing for the first movable end and the second movable end to move in relation to one another;
wherein a space (150) is defined between the first roller (120a) and the second roller (120b), **characterised in** further comprising an advancing unit (130) coupled to the first roller (120a) and configured to rotate the first roller (120a) around the first axis; and
a securing unit comprising a first securing component coupled to the first movable end of the first arm (110a) and a second securing component coupled to the second movable end of the second arm (110b), the first securing component and the second securing component configured to engage one another to secure together the first movable end and the second movable end.

2. The apparatus (100) of claim 1, wherein the first movable end and the second movable end are movable relative to one another to form a closed position in which the first roller (120a) and the second roller (120b) are substantially parallel to one another, optionally wherein, in the closed position, a first end region of the first movable end abuts a second end region of the second movable end.

3. The apparatus (100) of claim 2, wherein the space (150) accommodates a piece of flexible tubing, preferably wherein when the apparatus is closed with the piece of tubing inserted between the first and second rollers (120a, 120b), the piece of tubing is compressed in the space (150) between the first roller (120a) and the second roller (120b), more preferably wherein the space (150) between the first roller (120a) and the second roller (120b) is between about 0.5 millimeters (mm) to about 15 mm, more preferably wherein the space (150) between the first roller (120a) and the second roller (120b) is such that when the piece of tubing is compressed there between, the rollers (120a, 120b) can move relative to the piece of tubing.

4. The apparatus (100) of claim 3, wherein the movement is provided by sliding the apparatus over the piece of tubing, such as by manually sliding the apparatus over the piece of tubing; or wherein the movement is provided by the advancing unit (130), wherein the advancing unit (130) is rotated to rotate the first roller (120a).

5. The apparatus (100) of any one of claims 1-4, wherein the advancing unit (130) comprises a crank.

6. The apparatus (100) of any one of claims 1-5, wherein one or both of the first roller (120a) and the second roller (120b) comprise one of a smooth outer surface, a textured outer surface, or a serrated outer surface.

7. The apparatus (100) of any one of claims 2-6, further comprising an adjustment mechanism, preferably wherein:
(i) the adjustment mechanism (790, 890, 990) is present on the first arm (110a);
(ii) the adjustment mechanism (790, 890, 990) is present on the second arm (110b);
(iii) the adjustment mechanism (790, 890, 990) is present on both the first arm (110a) and the second arm (110b);
(iv) the adjustment mechanism (790, 890, 990) is configured to modulate the space (150) between the first roller (120a) and the second roller (120b) such that sufficient support is provided to seal the piece of tubing;
(v) the adjustment mechanism (790, 890, 990) is a pressure regulating mechanism; and/or
(vi) the pressure regulating mechanism is any one of a screw mechanism, a plurality of notches, and a spring mechanism.

8. A system, comprising:
a flexible tubing (680); and
a rolling apparatus (100) coupled to the flexible tubing, the rolling apparatus comprising an apparatus (100) of any one of claims 1-7;
wherein the flexible tubing is positioned in a space (150) defined between the first roller (120a) and the second roller (120b).

9. The system of claim 8, wherein the movement advances liquid in the flexible tubing along the flexible tubing.

10. A system comprising:
a transfer unit (601);
a length of tubing (680) having a first end and a second end, the first end associated with the transfer unit (601) such that a liquid material moves from the transfer unit (601) into the length of tubing (680) and exits the length tubing (680); and
a liquid material removal apparatus releasably coupled to the length of tubing (680), wherein the liquid material removal apparatus compresses the length tubing sufficiently to seal the length of tubing (680), and the apparatus is configured to move along the length of tubing (680) in order to move the liquid material along the length of tubing (680);
wherein the liquid material removal apparatus comprises the apparatus of any one of claims 1-7 or the length of tubing (680) and liquid material removal apparatus (600, 100, 400) comprise the system of claim 8 or 9.

11. The system of claim 10, further comprising a receiving unit (602), wherein the second end of the length of tubing (680) is associated with the receiving unit (602), such that the liquid material moves from the transfer unit (601) to the receiving unit (602) through the length of tubing (680).

12. The system of claim 10 or 11, wherein:
(i) the liquid material is a drug material, cell culture medium, spent medium, cell culture supplement, cell culture additive, cell culture feed, buffer, or water;
(ii) the drug material comprises a pharmaceutical compound or a precursor to a pharmaceutical compound;
(iii) the pharmaceutical compound is a biologic;
(iv) the biologic is selected from a peptide, a protein, a vaccine, a nucleic acid, a virion, and a cell; or
(v) the peptide or protein is an antibody or fragment thereof, an antigen, a cytokine, an enzyme, a hormone, a recombinant protein, or a fusion protein.

13. The system of any one of claims 10-12, wherein:
(i) the transfer unit (601) comprises a bioreactor, a filtration unit, a centrifuge unit, a vessel, or a tubing assembly; and/or
(ii) the receiving unit (602) comprises a bioreactor, a filtration unit, a centrifuge unit, a vessel, or a tubing assembly.

14. A method, comprising:
coupling a rolling apparatus (100, 600) to tubing (680), the rolling apparatus (100, 600) comprising an apparatus of any one of claims 1-7; and
advancing the rolling apparatus (100, 600) from a first portion of the tubing (680) to a second portion of the tubing (680) by rotating the first roller (120a) around the first axis such that liquid in the tubing (680) is advanced from the first portion of the tubing (680) to the second portion of the tubing (680).

15. The method of claim 14, wherein the tubing extends between a transfer unit (601) and a receiving unit (602), optionally the method further comprising:
advancing the rolling apparatus (100, 600) from the second portion of the tubing (680) to an entry point of the receiving unit (602) such that the liquid in the tubing (680) is advanced from the second portion of the tubing (680) to the receiving unit (602).

16. The method of claim 14 or 15, wherein:
(i) one or more of the transfer unit (601) and the receiving unit (602) comprise a bioreactor, a filtration unit, a centrifuge unit, a vessel, or a tubing assembly; and/or
(ii) the coupling the rolling apparatus to the tubing comprises:
positioning the tubing (680) in the space (150) between the first roller (120a) and the second roller (120b); and
moving one or more of the first movable end and the second movable end to form a closed position in which the first roller (120a) and the second roller (120b) are substantially parallel to one another.

17. The method of any one of claims 14-16, wherein substantially all of the liquid in the tubing (680) is removed by advancing the rolling apparatus (100, 600).

18. A method of removing liquid material from a length of tubing (680) when transferring the liquid material from a transfer unit (601) to a receiving unit (602), the method comprising:
providing the transfer unit (601) comprising a liquid material;
providing the receiving unit (602) into which the liquid material is to be transferred; and
providing a length of tubing (680) associated on a first end with the transfer unit (601) and on a second end with the receiving unit (602);
transferring the liquid material from the transfer unit (601) to the receiving unit (602) via the length of tubing;
releasably coupling a liquid material removal apparatus to the length of tubing (680) at or near the first end, and compressing a subsection of the tubing with the liquid material removal apparatus, thereby sealing the subsection of tubing such that substantially no liquid material can pass through the sealed subsection;
advancing the liquid material removal apparatus along the length of tubing (680) toward the receiving unit (602) by rotating the first roller (120a) around a first axis such that a quantity of liquid material in the length of tubing (680) is moved toward the second end of the length of tubing (680); and
collecting the moved liquid material in the receiving unit (602);
wherein the liquid material removal apparatus comprises the apparatus of one of claims 1-7 or the length of tubing (680), liquid material removal apparatus, transfer unit (601) and receiving unit (602) comprise the system of any one of claims 8-13.

19. The method of any one of claims 14-18, wherein:
(i) the liquid material is a drug material, cell culture medium, spent medium, cell culture supplement, cell culture additive, cell culture feed, buffer, or water;
(ii) the liquid material comprises a drug material;
(iii) the drug material comprises a pharmaceutical compound or a precursor to a pharmaceutical compound;
(iv) the pharmaceutical compound is a biologic;
(v) the biologic is selected from a peptide, a protein, a vaccine, a nucleic acid, a virion, and a cell; or
(vi) the protein is an antibody or fragment thereof, an antigen, a cytokine, an enzyme, a hormone, a recombinant protein, or a fusion protein.

## Patentansprüche

1. Vorrichtung (100), umfassend:
einen ersten Arm (110a), der ein erstes Längselement umfasst, das sich derart zwischen einem ersten angelenkten Ende (140) und einem ersten beweglichen Ende erstreckt, dass eine erste Öffnung durch innere Seitenwände des ersten Längselements, des ersten angelenkten Endes und des ersten beweglichen Endes definiert wird;
eine erste Rolle (120a), die innerhalb der ersten Öffnung angeordnet ist, wobei die erste Rolle (120a) um eine erste Achse drehbar ist, die sich in Längsrichtung zwischen der inneren Seitenwand des ersten angelenkten Endes und der inneren Seitenwand des ersten beweglichen Endes erstreckt;
einen zweiten Arm (110b), der ein zweites Längselement umfasst, das sich derart zwischen einem zweiten angelenkten Ende und einem zweiten beweglichen Ende erstreckt, dass eine zweite Öffnung durch innere Seitenwände des zweiten Längselements, des zweiten angelenkten Endes und des zweiten beweglichen Endes definiert wird;
eine zweite Rolle (120b), die innerhalb der zweiten Öffnung angeordnet ist, wobei die zweite Rolle um eine zweite Achse drehbar ist, die sich in Längsrichtung zwischen der inneren Seitenwand des zweiten angelenkten Endes und der inneren Seitenwand des zweiten beweglichen Endes erstreckt;
wobei der erste Arm (110a) mit dem zweiten Arm (110b) über eine Gelenkverbindung (140) zwischen dem ersten angelenkten Ende und dem zweiten angelenkten Ende verbunden ist, wobei die Gelenkverbindung eine Bewegung des ersten beweglichen Endes und des zweiten beweglichen Endes relativ zueinander ermöglicht;
wobei ein Raum (150) zwischen der ersten Rolle (120a) und der zweiten Rolle (120b) definiert ist, **dadurch gekennzeichnet, dass** sie ferner eine Vorschubeinheit (130), die mit der ersten Rolle (120a) verbunden und dazu eingerichtet ist, die erste Rolle (120a) um die erste Achse zu drehen, und eine Befestigungseinheit umfasst, die eine erste Befestigungskomponente, die mit dem ersten bewegliche Ende des ersten Arms (110a) verbunden ist, und eine zweite Befestigungskomponente umfasst, die mit dem zweiten beweglichen Ende des zweiten Arms (110b) verbunden ist, wobei die erste Befestigungskomponente und die zweite Befestigungskomponente dazu eingerichtet sind, ineinander zu greifen, um das erste bewegliche Ende und das zweite bewegliche Ende aneinander zu befestigen.

2. Vorrichtung (100) nach Anspruch 1, wobei das erste bewegliche Ende und das zweite bewegliche Ende relativ zueinander bewegbar sind, um eine geschlossene Stellung zu bilden, in der die erste Rolle (120a) und die zweite Rolle (120b) im Wesentlichen parallel zueinander sind, wahlweise wobei in der geschlossenen Stellung ein erster Endbereich des ersten beweglichen Endes an einem zweiten Endbereich des zweiten beweglichen Endes anliegt.

3. Vorrichtung (100) nach Anspruch 2, wobei der Raum (150) ein Stück flexiblen Schlauchs aufnimmt, vorzugsweise wobei, wenn die Vorrichtung geschlossen ist und das Schlauchstück zwischen die erste und die zweite Rolle (120a, 120b) eingefügt ist, das Schlauchstück in dem Raum (150) zwischen der ersten Rolle (120a) und der zweiten Rolle (120b) zusammengedrückt wird, noch bevorzugter wobei der Raum (150) zwischen der ersten Rolle (120a) und der zweiten Rolle (120b) zwischen ungefähr 0,5 Millimeter (mm) und ungefähr 15 mm beträgt, noch bevorzugter wobei der Raum (150) zwischen der ersten Rolle (120a) und der zweiten Rolle (120b) derart beschaffen ist, dass sich die Rollen (120a, 120b) relativ zu dem Schlauchstück bewegen können, wenn das Schlauchstück dazwischen zusammengedrückt wird.

4. Vorrichtung (100) nach Anspruch 3, wobei die Bewegung durch Schieben der Vorrichtung über das Schlauchstück bereitgestellt wird, wie etwa durch Schieben der Vorrichtung mit der Hand über das Schlauchstück; oder wobei die Bewegung durch die Vorschubeinheit (130) bereitgestellt wird, wobei die Vorschubeinheit (130) gedreht wird, um die erste Rolle (120a) zu drehen.

5. Vorrichtung (100) nach einem der Ansprüche 1 bis 4, wobei die Vorschubeinheit (130) eine Kurbel umfasst.

6. Vorrichtung (100) nach einem der Ansprüche 1 bis 5, wobei eine oder beide von der ersten Rolle (120a) und der zweiten Rolle (120b) eines von einer glatten Außenfläche, einer strukturierten Außenfläche oder einer geriffelten Außenfläche umfassen.

7. Vorrichtung (100) nach einem der Ansprüche 2 bis 6, ferner umfassend einen Einstellmechanismus, vorzugsweise wobei:
(i) sich der Einstellmechanismus (790, 890, 990) auf dem ersten Arm (110a) befindet;
(ii) sich der Einstellmechanismus (790, 890, 990) auf dem zweiten Arm (110b) befindet;
(iii) sich der Einstellmechanismus (790, 890, 990) sowohl auf dem ersten Arm (110a) als auch auf dem zweiten Arm (110b) befindet;
(iv) der Einstellmechanismus (790, 890, 990) dazu eingerichtet ist, den Raum (150) zwischen der ersten Rolle (120a) und der zweiten Rolle (120b) derart anzupassen, dass eine ausreichende Unterstützung zum Abdichten des Schlauchstücks bereitgestellt wird;
(v) der Einstellmechanismus (790, 890, 990) ein Druckregulierungsmechanismus ist; und/oder
(vi) der Druckregulierungsmechanismus eines von einem Schraubenmechanismus, einer Vielzahl von Kerben und einem Federmechanismus ist.

8. System, umfassend:
einen flexiblen Schlauch (680); und
eine Rollvorrichtung (100), die mit dem flexiblen Schlauch verbunden ist, wobei die Rollvorrichtung eine Vorrichtung (100) nach einem der Ansprüche 1 bis 7 umfasst;
wobei der flexible Schlauch in einem Raum (150) positioniert ist, der zwischen der ersten Rolle (120a) und der zweiten Rolle (120b) definiert ist.

9. System nach Anspruch 8, wobei die Bewegung Flüssigkeit in dem flexiblen Schlauch entlang des flexiblen Schlauchs vorwärtsbewegt.

10. System, umfassend:
eine Transfereinheit (601);
ein Schlauchstück (680) mit einem ersten Ende und einem zweiten Ende, wobei das erste Ende derart mit der Transfereinheit (601) verbunden ist, dass sich ein Flüssigmaterial von der Transfereinheit (601) in das Schlauchstück (680) bewegt und aus den Schlauchstück (680) austritt; und
eine Flüssigmaterialaustragvorrichtung, die lösbar mit dem Schlauchstück (680) verbunden ist, wobei die Flüssigmaterialaustragvorrichtung das Schlauchstück ausreichend zusammendrückt, um das Schlauchstück (680) abzudichten, und die Vorrichtung dazu eingerichtet ist, sich entlang des Schlauchstücks (680) zu bewegen, um das Flüssigmaterial entlang des Schlauchstücks (680) zu bewegen;
wobei die Flüssigmaterialaustragvorrichtung die Vorrichtung nach einem der Ansprüche 1 bis 7 umfasst oder das Schlauchstück (680) und die Flüssigmaterialaustragvorrichtung (600, 100, 400) das System nach Anspruch 8 oder 9 umfassen.

11. System nach Anspruch 10, ferner umfassend eine Aufnahmeeinheit (602), wobei das zweite Ende des Schlauchstücks (680) derart mit der Aufnahmeeinheit (602) verbunden ist, dass sich das Flüssigmaterial durch das Schlauchstück (680) von der Transfereinheit (601) zur Aufnahmeeinheit (602) bewegt.

12. System nach Anspruch 10 oder 11, wobei:
(i) das Flüssigmaterial ein Arzneimittelmaterial, Zellkulturmedium, verbrauchtes Medium, Zellkultursupplement, Zellkulturadditiv, Zellkultur-Feed, Puffer oder Wasser ist;
(ii) das Arzneimittelmaterial eine pharmazeutische Verbindung oder einen Präkursor für eine pharmazeutische Verbindung umfasst;
(iii) die pharmazeutische Verbindung ein Biologikum ist;
(iv) das Biologikum aus einem Peptid, einem Protein, einem Vakzin, einer Nukleinsäure, einem Virion und einer Zelle ausgewählt ist; oder
(v) das Peptid oder Protein ein Antikörper oder Fragment davon, ein Antigen, ein Zytokin, ein Enzym, ein Hormon, ein rekombinantes Protein oder ein Fusionsprotein ist.

13. System nach einem der Ansprüche 10 bis 12, wobei:
(i) die Transfereinheit (601) einen Bioreaktor, eine Filtrationseinheit, eine Zentrifugiereinheit, einen Kessel oder eine Schlauchanordnung umfasst; und/oder
(ii) die Aufnahmeeinheit (602) einen Bioreaktor, eine Filtrationseinheit, eine Zentrifugiereinheit, einen Kessel oder eine Schlauchanordnung umfasst.

14. Verfahren, umfassend:
Verbinden einer Rollvorrichtung (100, 600) mit einem Schlauch (680), wobei die Rollvorrichtung (100, 600) eine Vorrichtung nach einem der Ansprüche 1 bis 7 umfasst; und
Vorschieben der Rollvorrichtung (100, 600) von einem ersten Abschnitt des Schlauchs (680) zu einem zweiten Abschnitt des Schlauchs (680) durch Drehen der ersten Rolle (120a) um die erste Achse derart, dass Flüssigkeit in dem Schlauch (680) von dem ersten Abschnitt des Schlauchs (680) zum zweiten Abschnitt des Schlauchs (680) vorwärtsbewegt wird.

15. Verfahren nach Anspruch 14, wobei sich der Schlauch zwischen einer Transfereinheit (601) und einer Aufnahmeeinheit (602) erstreckt, wahlweise wobei das Verfahren ferner umfasst:
Vorschieben der Rollvorrichtung (100, 600) vom zweiten Abschnitt des Schlauchs (680) zu einem Eintrittspunkt der Aufnahmeeinheit (602) derart, dass die Flüssigkeit im Schlauch (680) von dem zweiten Abschnitt des Schlauchs (680) zur Aufnahmeeinheit (602) vorwärtsbewegt wird.

16. Verfahren nach Anspruch 14 oder 15, wobei:
(i) eine oder mehrere von der Transfereinheit (601) und der Aufnahmeeinheit (602) einen Bioreaktor, eine Filtrationseinheit, eine Zentrifugiereinheit, einen Kessel oder eine Schlauchanordnung umfassen; und/oder
(ii) das Verbinden der Rollvorrichtung mit dem Schlauch umfasst:
Positionieren des Schlauchs (680) in dem Raum (150) zwischen der ersten Rolle (120a) und der zweiten Rolle (120b); und
Bewegen von einem oder mehreren von dem ersten beweglichen Ende und dem zweiten beweglichen Ende derart, dass sie eine geschlossene Stellung bilden, in der die erste Rolle (120a) und die zweite Rolle (120b) im Wesentlichen parallel zueinander sind.

17. Verfahren nach einem der Ansprüche 14 bis 16, wobei im Wesentlichen die gesamte Flüssigkeit in dem Schlauch (680) durch Vorschieben der Rollvorrichtung (100, 600) entfernt wird.

18. Verfahren zum Entfernen von Flüssigmaterial aus einem Schlauchstück (680), wenn das Flüssigmaterial von einer Transfereinheit (601) zu einer Aufnahmeeinheit (602) transferiert wird, wobei das Verfahren umfasst:
Bereitstellen der Transfereinheit (601), die ein Flüssigmaterial enthält;
Bereitstellen der Aufnahmeeinheit (602), in die das Flüssigmaterial transferiert werden soll; und
Bereitstellen eines Schlauchstücks (680), das an einem ersten Ende mit der Transfereinheit (601) und an einem zweiten Ende mit der Aufnahmeeinheit (602) verbunden ist;
Transferieren des Flüssigmaterials von der Transfereinheit (601) über das Schlauchstück zur Aufnahmeeinheit (602);
lösbares Verbinden einer Flüssigmaterialaustragvorrichtung mit dem Schlauchstück (680) an oder nahe dem ersten Ende und Zusammendrücken eines Teilabschnitts des Schlauchs mit der Flüssigmaterialaustragvorrichtung, wodurch der Teilabschnitt des Schlauchs derart abgedichtet wird, dass im Wesentlichen kein Flüssigmaterial durch den abgedichteten Teilabschnitt gelangen kann;
Vorschieben der Flüssigmaterialaustragvorrichtung entlang des Schlauchstücks (680) in Richtung der Aufnahmeeinheit (602) durch Drehen der ersten Rolle (120a) um eine erste Achse derart, dass eine Flüssigmaterialmenge in dem Schlauchstück (680) in Richtung des zweiten Endes des Schlauchstücks (680) bewegt wird; und
Auffangen des bewegten Flüssigmaterials in der Aufnahmeeinheit (602);
wobei die Flüssigmaterialaustragvorrichtung die Vorrichtung nach einem der Ansprüche 1 bis 7 umfasst oder das Schlauchstück (680), die Flüssigmaterialaustragvorrichtung, die Transfereinheit (601) und die Aufnahmeeinheit (602) das System nach einem der Ansprüche 8 bis 13 umfassen.

19. Verfahren nach einem der Ansprüche 14 bis 18, wobei:
(i) das Flüssigmaterial ein Arzneimittelmaterial, Zellkulturmedium, verbrauchtes Medium, Zellkultursupplement, Zellkulturadditiv, Zellkultur-Feed, Puffer oder Wasser ist;
(ii) das Flüssigmaterial ein Arzneimittelmaterial umfasst;
(iii) das Arzneimittelmaterial eine pharmazeutische Verbindung oder einen Präkursor für eine pharmazeutische Verbindung umfasst;
(iv) die pharmazeutische Verbindung ein Biologikum ist;
(v) das Biologikum aus einem Peptid, einem Protein, einem Vakzin, einer Nukleinsäure, einem Virion und einer Zelle ausgewählt ist; oder
(vi) das Protein ein Antikörper oder Fragment davon, ein Antigen, ein Zytokin, ein Enzym, ein Hormon, ein rekombinantes Protein oder ein Fusionsprotein ist.

## Revendications

1. Appareil (100), comprenant :
un premier bras (110a) comprenant un premier élément longitudinal s'étendant entre une première extrémité articulée (140) et une première extrémité mobile de telle sorte qu'une première ouverture est définie par des parois latérales intérieures du premier élément longitudinal, de la première extrémité articulée et de la première extrémité mobile ;
un premier rouleau (120a) disposé à l'intérieur de la première ouverture, le premier rouleau (120a) pouvant tourner autour d'un premier axe s'étendant longitudinalement entre la paroi latérale intérieure de la première extrémité articulée et la paroi latérale intérieure de la première extrémité mobile ;
un second bras (110b) comprenant un second élément longitudinal s'étendant entre une seconde extrémité articulée et une seconde extrémité mobile de telle sorte qu'une seconde ouverture est définie par des parois latérales intérieures du second élément longitudinal, de la seconde extrémité articulée et de la seconde extrémité mobile ;
un second rouleau (120b) disposé à l'intérieur de la seconde ouverture, le second rouleau pouvant tourner autour d'un second axe s'étendant longitudinalement entre la paroi latérale intérieure de la seconde extrémité articulée et la paroi latérale intérieure de la seconde extrémité mobile ;
le premier bras (110a) étant accouplé au second bras (110b) par l'intermédiaire d'un accouplement articulé (140) entre la première extrémité articulée et la seconde extrémité articulée, l'accouplement articulé permettant le déplacement de la première extrémité mobile et de la seconde extrémité mobile l'une par rapport à l'autre ;
un espace (150) étant défini entre le premier rouleau (120a) et le second rouleau (120b), **caractérisé en ce qu'**il comprend en outre une unité d'avance (130) accouplée au premier rouleau (120a) et conçue pour faire tourner le premier rouleau (120a) autour du premier axe ; et
une unité de fixation comprenant un premier composant de fixation accouplé à la première extrémité mobile du premier bras (110a) et un second composant de fixation accouplé à la seconde extrémité mobile du second bras (110b), le premier composant de fixation et le second composant de fixation étant conçus pour venir en prise l'un avec l'autre afin de fixer ensemble la première extrémité mobile et la seconde extrémité mobile.

2. Appareil (100) selon la revendication 1, la première extrémité mobile et la seconde extrémité mobile étant mobiles l'une par rapport à l'autre afin de former une position fermée dans laquelle le premier rouleau (120a) et le second rouleau (120b) sont sensiblement parallèles l'un à l'autre, éventuellement, dans la position fermée, une première région d'extrémité de la première extrémité mobile venant en butée contre une seconde région d'extrémité de la seconde extrémité mobile.

3. Appareil (100) selon la revendication 2, l'espace (150) recevant un morceau de tube flexible, de préférence, lorsque l'appareil est fermé avec le morceau de tube inséré entre les premier et second rouleaux (120a, 120b), le morceau de tube étant comprimé dans l'espace (150) entre le premier rouleau (120a) et le second rouleau (120b), plus préférablement l'espace (150) entre le premier rouleau (120a) et le second rouleau (120b) étant situé entre environ 0,5 millimètre (mm) et environ 15 mm, plus préférablement l'espace (150) entre le premier rouleau (120a) et le second rouleau (120b) étant tel que lorsque le morceau de tube est comprimé entre eux, les rouleaux (120a, 120b) peuvent se déplacer par rapport au morceau de tube.

4. Appareil (100) selon la revendication 3, le déplacement étant fourni par coulissement de l'appareil sur le morceau de tube, par exemple par coulissement manuel de l'appareil sur le morceau de tube ; ou le déplacement étant fourni par l'unité d'avance (130), l'unité d'avance (130) étant mise en rotation pour faire tourner le premier rouleau (120a).

5. Appareil (100) selon l'une quelconque des revendications 1 à 4, l'unité d'avance (130) comprenant une manivelle.

6. Appareil (100) selon l'une quelconque des revendications 1 à 5, l'un ou les deux rouleaux parmi le premier rouleau (120a) et le second rouleau (120b) comprenant une surface parmi une surface externe lisse, une surface externe texturée ou une surface externe crantée.

7. Appareil (100) selon l'une quelconque des revendications 2 à 6, comprenant en outre un mécanisme d'ajustement, de préférence :
(i) le mécanisme d'ajustement (790, 890, 990) étant présent sur le premier bras (110a) ;
(ii) le mécanisme d'ajustement (790, 890, 990) étant présent sur le second bras (110b) ;
(iii) le mécanisme d'ajustement (790, 890, 990) étant présent à la fois sur le premier bras (110a) et le second bras (110b) ;
(iv) le mécanisme d'ajustement (790, 890, 990) étant conçu pour moduler l'espace (150) entre le premier rouleau (120a) et le second rouleau (120b) de telle sorte qu'un support suffisant est fourni afin de fermer hermétiquement le morceau de tube ;
(v) le mécanisme d'ajustement (790, 890, 990) étant un mécanisme de régulation de pression ; et/ou
(vi) le mécanisme de régulation de pression étant un quelconque mécanisme parmi un mécanisme à vis, une pluralité d'encoches et un mécanisme de ressort.

8. Système, comprenant :
un tube flexible (680) ; et
un appareil à rouleaux (100) accouplé au tube flexible, l'appareil à rouleaux comprenant un appareil (100) selon l'une quelconque des revendications 1 à 7 ;
le tube flexible étant positionné dans un espace (150) défini entre le premier rouleau (120a) et le second rouleau (120b).

9. Système selon la revendication 8, le déplacement faisant avancer le liquide dans le tube flexible le long du tube flexible.

10. Système comprenant :
une unité de transfert (601) ;
une longueur de tube (680) présentant une première extrémité et une seconde extrémité, la première extrémité étant associée à l'unité de transfert (601) de telle sorte qu'un matériau liquide se déplace à partir de l'unité de transfert (601) dans la longueur de tube (680) et sort de la longueur de tube (680) ; et
un appareil d'élimination de matériau liquide accouplé de manière amovible à la longueur de tube (680), l'appareil d'élimination de matériau liquide comprimant suffisamment la longueur de tube afin de fermer hermétiquement la longueur de tube (680) et l'appareil étant conçu pour se déplacer le long de la longueur de tube (680) afin de déplacer le matériau liquide le long de la longueur de tube (680) ;
l'appareil d'élimination de matériau liquide comprenant l'appareil selon l'une quelconque des revendications 1 à 7 ou la longueur de tube (680) et l'appareil d'élimination de matériau liquide (600, 100, 400) comprenant le système selon la revendication 8 ou 9.

11. Système selon la revendication 10, comprenant en outre une unité de réception (602), la seconde extrémité de la longueur de tube (680) étant associée à l'unité de réception (602), de telle sorte que le matériau liquide se déplace à partir de l'unité de transfert (601) vers l'unité de réception (602) à travers la longueur de tube (680).

12. Système selon la revendication 10 ou 11 :
(i) le matériau liquide étant un matériau médicamenteux, un milieu de culture cellulaire, un milieu usé, un supplément de culture cellulaire, un additif de culture cellulaire, une alimentation de culture cellulaire, un tampon ou de l'eau ;
(ii) le matériau médicamenteux comprenant un composé pharmaceutique ou un précurseur d'un composé pharmaceutique ;
(iii) le composé pharmaceutique étant une substance biologique ;
(iv) la substance biologique étant choisie parmi un peptide, une protéine, un vaccin, un acide nucléique, un virion et une cellule ; ou
(v) le peptide ou la protéine étant un anticorps ou un fragment correspondant, un antigène, une cytokine, une enzyme, une hormone, une protéine recombinante ou une protéine de fusion.

13. Système selon l'une quelconque des revendications 10 à 12 :
(i) l'unité de transfert (601) comprenant un bioréacteur, une unité de filtration, une unité de centrifugeuse, un récipient ou un ensemble tube ; et/ou
(ii) l'unité de réception (602) comprenant un bioréacteur, une unité de filtration, une unité de centrifugeuse, un récipient ou un ensemble tube.

14. Procédé, comprenant :
l'accouplement d'un appareil à rouleaux (100, 600) à un tube (680), l'appareil à rouleaux (100, 600) comprenant un appareil selon l'une quelconque des revendications 1 à 7 ; et
l'avancement de l'appareil à rouleaux (100, 600) à partir d'une première partie du tube (680) vers une seconde partie du tube (680) par rotation du premier rouleau (120a) autour du premier axe de telle sorte que le liquide dans le tube (680) est avancé à partir de la première partie du tube (680) vers la seconde partie du tube (680).

15. Procédé selon la revendication 14, le tube s'étendant entre une unité de transfert (601) et une unité de réception (602), éventuellement le procédé comprenant en outre :
l'avancement de l'appareil à rouleaux (100, 600) à partir de la seconde partie du tube (680) vers un point d'entrée de l'unité de réception (602) de telle sorte que le liquide dans le tube (680) est avancé à partir de la seconde partie du tube (680) vers l'unité de réception (602).

16. Procédé selon la revendication 14 ou 15 :
(i) une ou plusieurs unités parmi l'unité de transfert (601) et l'unité de réception (602) comprenant un bioréacteur, une unité de filtration, une unité de centrifugeuse, un récipient ou un ensemble tube ; et/ou
(ii) l'accouplement de l'appareil à rouleaux au tube comprenant :
le positionnement du tube (680) dans l'espace (150) entre le premier rouleau (120a) et le second rouleau (120b) ; et
le déplacement d'une ou plusieurs extrémités parmi la première extrémité mobile et la seconde extrémité mobile afin de former une position fermée dans laquelle le premier rouleau (120a) et le second rouleau (120b) sont sensiblement parallèles l'un à l'autre.

17. Procédé selon l'une quelconque des revendications 14 à 16, sensiblement la totalité du liquide dans le tube (680) étant éliminée par l'avancement de l'appareil à rouleaux (100, 600).

18. Procédé d'élimination de matériau liquide d'une longueur de tube (680) lors du transfert du matériau liquide à partir d'une unité de transfert (601) vers une unité de réception (602), le procédé comprenant :
la fourniture de l'unité de transfert (601) comprenant un matériau liquide ;
la fourniture de l'unité de réception (602) dans laquelle le matériau liquide doit être transféré ; et
la fourniture d'une longueur de tube (680) associée sur une première extrémité à l'unité de transfert (601) et sur une seconde extrémité à l'unité de réception (602) ;
le transfert du matériau liquide à partir de l'unité de transfert (601) vers l'unité de réception (602) par l'intermédiaire de la longueur de tube ;
l'accouplement amovible d'un appareil d'élimination de matériau liquide à la longueur de tube (680) au niveau ou à proximité de la première extrémité et la compression d'une sous-section du tube à l'aide de l'appareil d'élimination de matériau liquide, fermant ainsi hermétiquement la sous-section de tube de telle sorte que sensiblement aucun matériau liquide ne peut passer à travers la sous-section fermée hermétiquement ;
l'avancement de l'appareil d'élimination de matériau liquide le long de la longueur de tube (680) vers l'unité de réception (602) par rotation du premier rouleau (120a) autour d'un premier axe de telle sorte qu'une quantité de matériau liquide dans la longueur de tube (680) est déplacée vers la seconde extrémité de la longueur de tube (680) ; et
la collecte du matériau liquide déplacé dans l'unité de réception (602) ;
l'appareil d'élimination de matériau liquide comprenant l'appareil selon l'une quelconque des revendications 1 à 7 ou la longueur de tube (680), un appareil d'élimination de matériau liquide, une unité de transfert (601) et une unité de réception (602) comprenant le système selon l'une quelconque des revendications 8 à 13.

19. Procédé selon l'une quelconque des revendications 14 à 18 :
(i) le matériau liquide étant un matériau médicamenteux, un milieu de culture cellulaire, un milieu usé, un supplément de culture cellulaire, un additif de culture cellulaire, une alimentation de culture cellulaire, un tampon ou de l'eau ;
(ii) le matériau liquide comprenant un matériau médicamenteux ;
(iii) le matériau médicamenteux comprenant un composé pharmaceutique ou un précurseur d'un composé pharmaceutique ;
(iv) le composé pharmaceutique étant une substance biologique ;
(v) la substance biologique étant choisie parmi un peptide, une protéine, un vaccin, un acide nucléique, un virion et une cellule ; ou
(vi) la protéine étant un anticorps ou un fragment correspondant, un antigène, une cytokine, une enzyme, une hormone, une protéine recombinante ou une protéine de fusion.
